# EUROPÄISCHE PATENTSCHRIFT

(11) **EP 3 056 165 B1**
(45) Veröffentlichungstag und Bekanntmachung des Hinweises auf die Patenterteilung: **19.05.2021**
(21) Anmeldenummer: 16155168.4
(22) Anmeldetag: 11.02.2016
(51) Int. Cl.: A61C 7/00, A61C 7/14, A61C 13/00

(54) **ZAHNMEDIZINISCHE VORRICHTUNG MIT ÜBERTRAGUNGSSCHALE**
DENTAL MEDICAL DEVICE WITH TRANSFER SHELL
DISPOSITIF MEDICAL DENTAIRE COMPRENANT UNE COQUE DE TRANSFERT

(30) Priorität: 12.02.2015 DE 102015102058
(43) Veröffentlichungstag der Anmeldung: 17.08.2016
(73) Patentinhaber: Hodecker, Matthias, 3008 Bern (CH); Wein, Stephan, 52064 Aachen (DE); Wüllenweber, Peter, 52379 Langerwehe (DE)
(72) Erfinder: Hodecker, Matthias, 3008 Bern (CH); Wein, Stephan, 52064 Aachen (DE)
(74) Vertreter: Patentanwälte Bauer Vorberg Kayser

(56) Entgegenhaltungen:
- WO-A1-00/32132
- DE-A1-102013 010 186
- US-A1- 2006 084 026
- US-A1- 2006 154 207

## Beschreibung

### Gebiet der Erfindung

Die Erfindung bezieht sich auf eine zahnmedizinische Vorrichtung mit Übertragungsschale, ein Verfahren zur Herstellung einer zahnmedizinischen Vorrichtung mit Übertragungsschale, ein entsprechendes Herstellungsgerät und ein zugehöriges Computerprogrammprodukt.

### Hintergrund der Erfindung

Die WO 2009/158231 A1 offenbart ein computer-implementiertes Verfahren zum Herstellen einer Übertragungsschale mittels Rapid-Prototyping-Verfahren, wobei der gingivale Rand der Schale so ausgestaltet ist, um sich mit zumindest einer Aufnahme zur Aufnahme eines kieferorthopädischen Apparats zu kreuzen.

Die US 2006/154207 A1 offenbart ein Verfahren zur Erstellung digitaler Modelle von dentalen Positionierungsgeräten. Es wird weiterhin offenbart, digitale Model mittels 3D-Druck in ein Wachsmodell zu überführen.

Die DE10201310186 offenbart die additive Herstellung einer Übertragungsschale, welche anschließend durch einen Roboter mit Brackets bestückt wird.

### Zusammenfassung der Erfindung

Aus dem Stand der Technik bekannte Übertragungsschalen werden passend zu einer zahnmedizinischen Vorrichtung angefertigt. Diese Übertragungsschalen weisen Aussparungen oder Aufnahmestrukturen auf, in die eine zahnmedizinische Vorrichtung eingelegt werden kann. Die Anpassung der Übertragungsschale ist aufwendig und mit vielen Arbeitsschritten verbunden. Das Einlegen der zahnmedizinischen Vorrichtung ist zudem mit Ungenauigkeiten verbunden, so dass es leicht zu einer fehlerhaften Positionierung der zahnmedizinischen Vorrichtung kommen kann.

Es ist eine Aufgabe der vorliegenden Erfindung, eine verbesserte zahnmedizinische Vorrichtung mit Übertragungsschale zur Verfügung zu stellen, die insbesondere ein einfaches Trennen der Übertragungsschale von der zahnmedizinischen Vorrichtung ermöglicht. Die Erfindung ist definiert durch die unabhängigen Ansprüche 1, 4, 9, 10 und 11.

Gemäß eines ersten Aspektes der Erfindung wird eine zahnmedizinische Vorrichtung mit Übertragungsschale zur Verfügung gestellt. Die zahnmedizinische Vorrichtung und die Übertragungsschale werden in einem additiven Fertigungsverfahren so hergestellt, dass sie durch eine während des additiven Fertigungsverfahrens hergestellte Kopplungsstruktur lösbar miteinander gekoppelt sind. Erfindungsgemäß umfassen die zahnmedizinische Vorrichtung, die Kopplungsstruktur und die Übertragungsschale in einer ersten Variante ein erstes Material, wobei die Kopplungsstruktur eine höhere Porosität als die zahnmedizinische Vorrichtung aufweist, wobei die Porosität der Kopplungsstruktur so gewählt ist, dass die Übertragungsschale von der zahnmedizinischen Vorrichtung gelöst werden kann, ohne die zahnmedizinische Vorrichtung zu beschädigen.

Der Begriff zahnmedizinische Vorrichtung umfasst Vorrichtungen, wie zum Beispiel kieferorthopädische, konservierende, prothetische und funktionelle Vorrichtungen, die im Mundraum adhäsiv befestigt werden können. Die Übertragungsschale ist somit zum Beispiel zur Positionierung und Fixierung von Inlays, Brücken, Veneers, funktionellem Aufbiss, Retainer oder Brackets geeignet, die zusammen mit der Übertragungsschale mittels des additiven Herstellungsverfahrens hergestellt werden.

Additive Herstellungsverfahren umfassen z.B. das direkte Drucken von Kunststoffen, wie z.B. Polymethylmethaacrylat (PMMA), aber auch das Drucken von Silikonen, wobei beide Materialien auch in einem kombinierten Druckverfahren abwechselnd verwendet werden können. Des Weiteren können Keramikkomposite durch das Drucken von Bindemitteltröpfchen in einem Bett aus Keramikpartikeln hergestellt werden. Metalle oder Keramiken können direkt in einem Bett aus den jeweiligen Partikeln gesintert werden. Komplexe dreidimensionale Metallobjekte lassen sich überdies mittels Selektivem Laser Schmelzen herstellen.

Additive Verfahren haben den Vorteil, dass die Komplexität des Gegenstands für die Herstellungskosten im Wesentlichen bedeutungslos ist. Des Weiteren ist es mittels additiver Herstellungsverfahren möglich skelettierte zahnmedizinische Vorrichtungen mit Übertragungsschale und Kopplungsstruktur herzustellen, die aus einem Minimum an Material bestehen und dennoch die für die Funktion erforderlichen mechanischen Eigenschaften aufweist (Stabilisierung der Zähne, Rückstellkraft bei Auslenkung der Zähne unter Belastung etc.).
Additive Verfahren weisen zudem die Möglichkeit auf, die Materialeigenschaften ingewissem Umfang schichtweise ändern zu können. Es ist somit möglich, elastische Eigenschaften einer zahnmedizinischen Vorrichtung mit Übertragungsschale und Kopplungsstruktur nicht nur über die Struktur sondern auch lokal durch die Materialeigenschaften zu beeinflussen. Dies kann insbesondere dazu verwendet werden, die Kopplungsstruktur so zu gestalten, dass ein einfaches Ablösen der Übertragungsschale nach der Klebung der zahnmedizinischen Vorrichtung ermöglicht wird. Die Kopplungsstruktur kann somit durch lokal veränderte Materialeigenschaften verbessert oder ermöglicht werden. So kann zum Beispiel die Zusammensetzung eines Kunststoffes lokal so geändert werden, dass dieser spröde ist und somit beim Ablösen der Übertragungsschale von der zahnmedizinischen Vorrichtung bei geringer Krafteinwirkung bricht. Alternativ kann die Prozessführung beim additiven Herstellungsverfahren so verändert werden, dass die nacheinander abgeschiedenen Schichten keine Verbindung eingehen. Dies kann zum Beispiel beim Thermodrucken von PMMA dadurch erreicht werden, dass die Oberfläche zum Beispiel der zahnmedizinischen Vorrichtung lokal immer so weit abkühlt, dass die nachfolgend abgeschiedene PMMA Schicht, die die Kopplungsstruktur bildet, im Wesentlichen keine Verbindung mit der Oberfläche der zahnmedizinischen Vorrichtung eingeht. Bei einer Verwendung von Partikeln aus Kompositmaterialien in Kombination mit Bindemitteln könnte alternativ die Menge, Viskosität oder Art des Bindemittels lokal so vermindert werden, dass die Partikel des Kompositmaterials nur schwach miteinander verklebt werden, so dass das Ablösen der Übertragungsschale erleichtert wird.
Die zahnmedizinische Vorrichtung und die Übertragungsschale können somit mittels des additiven Fertigungsverfahrens auf einfache Weise an die jeweilige Gebissstruktur individuell angepasst werden.

Die zahnmedizinische Vorrichtung und die Übertragungsschale werden in einem einheitlichen Fertigungsprozess mittels additiver Fertigungsmethoden hergestellt. Dies könnte den Vorteil haben, dass es nicht erforderlich ist, nach zum Beispiel der Herstellung der zahnmedizinischen Vorrichtung die Positionierung der zahnmedizinischen Vorrichtung zu bestimmen, um in einem anschließenden Fertigungsprozess die Übertragungsschale richtig positioniert auf der zahnmedizinischen Vorrichtung herstellen zu können.

Die zahnmedizinische Vorrichtung, die Kopplungsstruktur und die Übertragungsschale bestehen somit gemäß einer Ausführungsform aus einem ersten Material. Die Zusammensetzung des ersten Materials muss dabei nicht durchgehend identisch sein. Das erste Material kann, wie zuvor beschrieben, lokal oder schichtweise variiert werden, um die Materialeigenschaften des ersten Materials zu beeinflussen.

Das erste Material umfasst vorzugsweise ein Material aus der Gruppe Komposit oder Kunststoff. Komposite sind vorzugsweise nanogefüllte, hochästhetisches, gut polierbares und biokompatibles Komposite. Ein spezieller Kunststoff von großer Bedeutung ist biokompatibles PMMA, welches sich auf relativ einfache Weise mittels eines dreidimensionalen thermischen Druckverfahrens verarbeiten lässt. Es ist wesentlich für alle Materialien, dass diese biokompatibel sind. Der Begriff erstes Material schließt nicht aus, dass sich die Materialzusammensetzung, wie zuvor beschrieben, lokal in gewissen Grenzen ändern kann.

Materialien wie Kunststoffe oder Komposite können den Vorteil haben, dass die zahnmedizinische Vorrichtung, die Kopplungsstruktur und Übertragungsschale innerhalb eines geschlossenen additiven Fertigungsverfahrens hergestellt werden können. Die zahnmedizinische Vorrichtung, die Kopplungsstruktur und Übertragungsschale können dabei in ihren mechanischen Eigenschaften durch lokal begrenzte Veränderung der Materialeigenschaften und insbesondere durch den strukturellen Aufbau beeinflusst werden.

Das Material der zahnmedizinischen Vorrichtung mit Übertragungsschale und der Kopplungsstruktur weist vorzugsweise eine Beimischung mindestens eines Farbstoffs auf, um die Farbe zahnmedizinischen Vorrichtung z.B. an eine Zahnfarbe und/oder Zahnfleischfarbe anzupassen. Der Farbstoff kann mittels additiver Herstellungsverfahren dem Material auch lokal beigemischt werden. Die Farbe oder die Farben können je nach Patientenwunsch individuell angepasst werden, so dass die Farbe oder Farben nicht der Zahnfarbe und/oder Zahnfleischfarbe entsprechen muss. Eine Beimischung der Farbe hat den Vorteil, dass Beschädigungen der Oberfläche keine Auswirkung auf die Farbe haben. Des Weiteren ist ein nachträgliches Polieren auch zu Reinigungszwecken unkritisch, da es nicht zu Abplatzungen einer Farbschicht kommen kann. Die Beimischung der Farbe kann es zudem ermöglichen die zahnmedizinische Vorrichtung von der Kopplungsstruktur und/oder der Übertragungsschale abzugrenzen. Dies kann insbesondere bei nahezu identischen Materialeigenschaften dazu verwendet werden nach Entfernung der Übertragungsschale, Reste der Kopplungsstruktur und/oder der Übertragungsschale identifizieren zu können. Dies könnte die Entfernung dieser Reste zum Beispiel mittels Polierens erleichtern.

Die Kopplungsstruktur weist erfindungsgemäß in der ersten Variante eine höhere Porosität als die zahnmedizinische Vorrichtung auf. Die Porosität der Kopplungsstruktur ist dabei so gewählt, dass die Übertragungsschale von der zahnmedizinischen Vorrichtung gelöst werden kann, ohne die zahnmedizinische Vorrichtung zu beschädigen. Die Porosität kann mittels additiver Fertigungsverfahren zum Beispiel durch das Drucken einer netzartigen oder wabenartigen Struktur eingestellt werden. Es ist somit möglich eine zahnmedizinische Vorrichtung mit hoher Dichte aus zum Beispiel PMMA herzustellen und die Kopplungsstruktur ebenfalls aus PMMA als Wabenstruktur mit geringer Dichte herzustellen. Die Elastizität der Wabenstruktur kann dabei durch lokale Variation der Materialeigenschaften des PMMA lokal variiert werden, sodass ein Ablösen der Übertragungsschale von der zahnmedizinischen Vorrichtung erleichtert wird. Die Kraft zum Ablösen der Übertragungsschale muss so gering sein, dass die Klebestelle zwischen zahnmedizinischen Vorrichtungen und den jeweiligen Zähnen möglichst wenig belastet wird. Des Weiteren soll das Ablösen mit möglichst geringer Belastung für den Patienten einhergehen. Die Übertragungsschale kann dabei die gleiche wabenartige Struktur und auch Materialeigenschaften wie die Kopplungsstruktur aufweist. Alternativ könnte es aber auch vorteilhaft sein, dass die Übertragungsschale eine Wabenstruktur mit einer geringeren Porosität als die Kopplungsstruktur aufweist. Dies könnte gewährleisten, dass sich die Übertragungsschale ohne Rest oder mit möglichst wenigen Resten von der kieferorthopädischen Vorrichtung ablösen lässt. Die Ausgestaltung der Wabenstruktur bei der Verwendung eines Kunststoffes wie Polymethylmetaacrylat (PMMA) könnte es somit ermöglichen, die mechanischen Eigenschaften lokal anzupassen.

Die Kopplungsstruktur besteht erfindungsgemäß in einer alternativen zweiten Variante aus einem anderen zweiten Material als die zahnmedizinische Vorrichtung und/oder die Übertragungsschale. Das erste und das zweite Material können sich in ihren Materialeigenschaften deutlich voneinander unterscheiden. Erfindungsgemäß weist die Kopplungsstruktur in der zweiten Variante eine Pulverschicht aus dem zweiten Material oder eine Flüssigkeitsschicht aus dem zweiten Material auf.

Es wäre in einer Ausführungsform vorteilhaft, wenn das erste und das zweite Material zum Beispiel in einem zusammenhängenden Fertigungsverfahren gedruckt werden. Das Herstellungsgerät zur Herstellung der zahnmedizinischen Vorrichtung und der Übertragungsschale könnte zum Beispiel zwei Druckköpfe aufweisen. Die zwei Druckköpfe könnten zum Beispiel gemeinsam oder unabhängig voneinander verfahrbar sein. Der erste Druckkopf könnte so ausgestaltet sein, dass er Strukturen aus Kunststoff, insbesondere PMMA, drucken kann. Der zweite Druckkopf könnte so ausgestaltet sein, dass er Strukturen aus einem Silikonmaterial drucken kann. Ein solches Herstellungsgerät ermöglicht es, selektiv Strukturen aus PMMA oder Silikon herzustellen. Die zahnmedizinische Vorrichtung und Übertragungsschale könnten somit aus PMMA bestehen und durch eine Silikonschicht die als Kopplungsstruktur fungiert getrennt werden. Die Steifigkeit der zahnmedizinischen Vorrichtung und/oder der Kopplungsstruktur kann dabei, wie zuvor beschrieben, zum Beispiel mittels einer entsprechenden Porosität eingestellt werden. Alternativ ist es möglich, die zahnmedizinische Vorrichtung aus einem Kunststoff mit hoher Steifigkeit herzustellen und die Übertragungsschale aus einem flexiblen Silikon herzustellen. Die Prozessführung und/oder die Materialeigenschaften können dabei so gewählt werden, dass der Kunststoff und das Silikon keine dauerhafte Verbindung eingehen. Die Übertragungsschale aus Silikon kann somit auf einfache Weise nach der Klebung der zahnmedizinischen Vorrichtung von dieser abgezogen werden. Die Trennschicht zwischen Kunststoff und Silikon würde in diesem Fall die Kopplungsstruktur bilden.

Alternativ könnten die zahnmedizinische Vorrichtung und die Übertragungsschale auch in mehreren Schritten hergestellt werden, die nicht notwendig in nur einem geschlossenen Herstellungsgerät zur Herstellung der zahnmedizinischen Vorrichtung mit Übertragungsschale ausgeführt werden müssen. Die kieferorthopädische Vorrichtung kann zum Beispiel in einem ersten Fertigungsschritt mit einem ersten Teilgerät zur Herstellung der zahnmedizinischen Vorrichtung mit Übertragungsschale hergestellt werden. Auf der zahnmedizinischen Vorrichtung wird sodann die Kopplungsstruktur, zum Beispiel eine Schicht aus einem anderen Material als die zahnmedizinische Vorrichtung, in einem zweiten Teilgerät zur Herstellung der zahnmedizinischen Vorrichtung mit Übertragungsschale aufgebracht. Die zahnmedizinische Vorrichtung wird zusammen mit der Kopplungsstruktur wieder in das erste Teilgerät überführt und anschließend wird die Übertragungsschale auf der Oberfläche der Kopplungsstruktur mittels des ersten Teilgeräts hergestellt.

Alternativ wäre es auch möglich, dass die Kopplungsstruktur und die Übertragungsschale aus dem gleichen Material in dem zweiten Teilgerät produziert werden. Dies würde es ermöglichen sehr verschiedene Materialien miteinander zu kombinieren. So könnten zum Beispiel im ersten Teilgerät zahnmedizinische Vorrichtungen mittels Lasersintern aus Metall hergestellt werden. Mittels des zweiten Teilgeräts könnte dann zum Beispiel Silikon auf der Oberfläche der zahnmedizinischen Vorrichtung gedruckt werden, um die Übertragungsschale zu bilden. Der Übergang zwischen dem Metall der zahnmedizinischen Vorrichtung und dem Silikon der Übertragungsschale würde in diesem Fall die Kopplungsstruktur bilden. Damit die Übertragungsschale in diesem Fall richtig aufgebracht werden kann, wäre es erforderlich, die zahnmedizinische Vorrichtung in einer definierten Position in die zweite Teilvorrichtung einzubringen. Alternativ könnte aber auch die Positionierung der zahnmedizinischen Vorrichtung in der zweiten Teilvorrichtung auch zum Beispiel optisch detektiert werden, um die Übertragungsschale korrekt auf der Oberfläche der zahnmedizinischen Vorrichtung aufzudrucken.

Es ist in diesem Zusammenhang zu beachten, dass Oberflächenelemente der zahnmedizinischen Vorrichtung, die mittels der Kopplungsstruktur mit der Übertragungsschale gekoppelt werden sollen, bei einem solchen Verfahren, das zwei oder mehrere Teilschritte in zwei oder mehreren Teilgeräten umfasst, für den nachfolgenden Prozess des Druckens der Kopplungsstruktur bzw. Übertragungsschale zugänglich sein müssen. Man könnte auch von der Übertragungsschale ausgehen, wenn die Übertragungsschale so ausgestaltet wird, dass die Oberfläche, auf der die Kopplungsstruktur und anschließend die zahnmedizinischen Vorrichtung aufgebracht werden soll, für das weitere Verfahren zugänglich ist und das additive Herstellungsverfahren zur Herstellung der zahnmedizinischen Vorrichtung mit dem Material der Übertragungsschale kompatibel ist. Das additive Herstellungsverfahren zur Herstellung der zahnmedizinischen Vorrichtung darf nicht die Eigenschafften der Übertragungsschale beeinträchtigen.

Man könnte alternativ auch nur Teile der zahnmedizinischen Vorrichtung oder der Übertragungsschale produzieren. Anschließend würde die Kopplungsstruktur aufgebracht, und im dritten Schritt wird der Rest der zahnmedizinischen Vorrichtung und der Übertragungsschale hergestellt. Der letzte Herstellungsschritt umfasst dabei den komplementären Teil der herzustellenden Struktur, der während der ersten Verfahrensschritte nicht produziert wurde. Bei diesem Vorgehen ist zu beachten, dass keine unbeabsichtigten Verbindungen zwischen der zahnmedizinischen Vorrichtung und der Übertragungsschale hergestellt werden, die ein Ablösen der Übertragungsschale von der zahnmedizinischen Vorrichtung erschweren oder unmöglich machen würde.

Das zweite Material kann in einer Ausführungsform so gewählt werden, dass die Kopplungsstruktur keine Verbindung mit der zahnmedizinischen Vorrichtung und/oder mit der Übertragungsschale eingeht. Die Benetzungseigenschaften des zweiten Materials werden vorzugsweise so gewählt, dass die Benetzung zwischen dem ersten und zweiten Material während des Herstellungsprozesses gering ist.

Die Kopplungsstruktur weist in der alternativen zweiten Ausführungsform eine Pulverschicht aus dem zweiten Material oder eine Flüssigkeitsschicht aus dem zweiten Material auf.

Die Übertragungsschale ist vorzugsweise für ultraviolettes Licht möglichst transparent. Die Kopplungsstruktur könnte dann ein zweites Material aufweisen, das durch ultraviolettes Licht strukturell geschwächt wird. Ein solches zweites Material könnte zum Beispiel UV sensitives Silikon sein, der sich bei einfallendem UV-Licht zersetzt bzw. porös wird und somit leicht zum Beispiel von der Oberfläche der zahnmedizinischen Vorrichtung abgelöst werden kann. Das UV- Licht kann dabei optional von lingual eingestrahlt werden. Alternativ wäre es auch möglich, die Intensität des UV-Lichtes so zu wählen, dass dieses von labialer Seite eingestrahlt werden kann und sowohl zum Aushärten des Klebers zur Befestigung der zahnmedizinischen Vorrichtung als auch zur Zersetzung des UV-sensitiven Materials ausreicht.

Die Kopplungsstruktur und die Übertragungsschale können aus dem zweiten Material bestehen, wobei das zweite Material eine geringere Steifigkeit als das erste Material aufweist, so dass sich die Übertragungsschale ohne mechanische Hilfsmittel von der zahnmedizinischen Vorrichtung ablösen lässt.
Das zweite Material kann insbesondere ein Silikon sein, das im UV-Bereich transparent ist. Die Beleuchtung der Klebestelle mit UV-Licht kann dann durch die Übertragungsschale erfolgen. Die Kopplungsstruktur bildet in diesem Fall die Grenzschicht zwischen der Übertragungsschale und der zahnmedizinischen Vorrichtung. Das zweite Material, aus dem die Übertragungsschale und die Kopplungsstruktur bestehen, ist dabei so gewählt dass während der Herstellung keine dauerhafte Verbindung zwischen dem ersten Material der zahnmedizinischen Vorrichtung und dem zweiten Material der Kopplungsstruktur entsteht.

Die Übertragungsschale weist vorzugsweise eine Mantelstruktur auf, die die äußere Oberfläche der Übertragungsschale verstärkt. Die Mantelstruktur kann durch eine Veränderung des strukturellen Aufbaus der Übertragungsschale und/oder durch die Veränderung der Materialeigenschaften erreicht werden. Die Mantelstruktur soll dabei insbesondere die Handhabbarkeit der Übertragungsschale mit der zahnmedizinischen Vorrichtung erleichtern.

Die Mantelstruktur weist vorzugsweise zumindest zwei Segmente auf, um ein Abheben der Übertragungsschale von der zahnmedizinischen Vorrichtung von distal zu erleichtern. Diese Segmente sind vorzugsweise in Querrichtung angebracht, um das Abhebeln von distal zu erleichtern. Die Oberfläche ist vorzugsweise frei von Unebenheiten und besitzt durch das glatte und an Kanten und Ecken abgerundete Design ein angenehmes und anwenderfreundliches Handling.

Die Mantelstruktur weist vorzugsweise ein Polymerisationsfenster zur Polymerisation des Klebers zur Fixierung der zahnmedizinischen Vorrichtung auf. Die Mantelstruktur kann dabei so ausgestaltet sein, dass sie zumindest teilweise ultraviolettes Licht reflektiert, um den Polymerationsprozess zu unterstützen oder zu verhindern, dass UV-Licht hoher Intensität in den Mundraum eingestrahlt wird.

Die Übertragungsschale weist vorzugsweise zumindest eine Anpressmulde auf, die so eingerichtet ist, dass eine Anpresskraft, die auf die Anpressmulde aufgebracht wird, so auf die zahnmedizinische Vorrichtung übertragen wird, dass die zahnmedizinische Vorrichtung orthogonal auf die Oberfläche des jeweiligen Zahns aufgedrückt wird. Die Anpressmulde ist so eingerichtet, dass die Kraftübertragung beim Anpressen der zahnmedizinischen Vorrichtung nicht zu einer Verschiebung der zahnmedizinischen Vorrichtung führt. Die Anpressmulde kann entweder in der Mantelstruktur oder, sofern eine solche Mandelstruktur nicht vorhanden ist, auf der Außenseite der Übertragungsschale angebracht sein. Die Anpressmulde ermöglicht es auf einfache Weise, die zahnmedizinische Vorrichtung auf den oder die Zähne anzupressen, ohne dass es zu Verschiebungen kommt. Die Anpressmulde kann dabei durch die Struktur der Übertragungsschale unterhalb der Anpressmulde in ihrer Funktion unterstützt werden, so dass die Kräfte gezielt auf die Zähne übertragen werden können. Die Übertragungsschale kann zum Beispiel eine Wabenstruktur aufweisen, die unterhalb der Anpressmulde eine geringere Dichte aufweist. Die geringere Dichte leitet zum Beispiel den Finger eines Anwenders (Zahnarzt oder Kieferorthopäde), so dass dieser aufgrund seines haptischen Empfindens angeleitet wird, den Anpressdruck auf definierte Weise auszuüben.

Die Anpressmulde oder die Anpressmulde können auch so angeordnet bzw. eingerichtet sein, dass die zahnmedizinische Vorrichtung durch das Anpressen mittels der Anpressmulde in eine definierte Vorspannung überführt wird. Diese Vorspannung kann zum Beispiel dazu verwendet werden, um eine definierte Kraft auf die mittels der zahnmedizinischen Vorrichtung gekoppelten Zähne auszuüben. Alternativ oder zusätzlich kann der Anpressdruck durch eine funktionale Ausgestaltung der Kopplungsstruktur definiert auf die zahnmedizinische Vorrichtung übertragen werden. Die Kopplungsstruktur kann zum Beispiel federnde Verbinder aufweisen, die aufgrund einer Auslenkung beim Platzieren der Übertragungsschale mit der zahnmedizinischen Vorrichtung einen definierten Anpressdruck auf die zahnmedizinische Vorrichtung ausüben.

Die Übertragungsschale weist vorzugsweise Stützelemente zur Abstützung der Übertragungsschale auf einer Zahnoberfläche auf. Die Stützelemente könnten das Ablösen der Übertragungsschale erleichtern, da die Oberfläche, mit der sich die Übertragungsschale und die Zähne berühren, minimiert oder zumindest verkleinert wird. Die Stützelemente können zudem so ausgestaltet sein, dass sie eine präzise Positionierung der Übertragungsschale und der über die Kopplungsstruktur mit Übertragungsschale gekoppelten zahnmedizinischen Vorrichtung ermöglicht.

Die Übertragungsschale weist zudem vorzugsweise Positionierungselemente auf, die eine Positionierung der Übertragungsschale und damit der zahnmedizinischen Vorrichtung erleichtern. Ein solches Positionierungselement kann zum Beispiel eine Mittellinie sein, die die Mitte der Übertragungsschale in Relation zum Gebiss oder Kiefer, mit dem die zahnmedizinische Vorrichtung gekoppelt werden soll, kennzeichnet. Die Übertragungsschale oder auch die Mantelstruktur kann alternativ oder zusätzlich weitere Positionierungselemente aufweisen, die mit markanten Punkten des Gebisses korrespondieren. So kann eine Übertragungsschale mit zahnmedizinischer Vorrichtung für einen Teil eines Unterkiefers zum Beispiel Positionierungselemente aufweisen, die mit den Eckzähnen des Oberkiefers korrespondieren. Die Positionierungselemente können optional auch als Anpressmulde ausgestaltet sein. Die Positionierung der zahnmedizinischen Vorrichtung könnte in diesem Fall zum Beispiel durch das Anpressen des Unterkiefers an den Oberkiefer erfolgen. Mittels der additiven Erstellungsverfahren wäre es somit möglich die komplette Struktur des Gebisses zu berücksichtigen und für die Positionierung der zahnmedizinischen Vorrichtung zu nutzen.

Es ist eine weitere Aufgabe der vorliegenden Erfindung, ein verbessertes Verfahren zur Herstellung einer zahnmedizinischen Vorrichtung mit Übertragungsschale zur Verfügung zu stellen. Das Verfahren umfasst die Schritte:
- Erstellen eines digitalen Modells der zahnmedizinischen Vorrichtung basierend auf einem Model von zumindest einem Zahn, vorzugsweise aber zwei Zähnen, eines Kiefers;
- Erstellen eines digitalen Modells der Übertragungsschale basierend auf dem Model des oder der Zähne des Kiefers;
- Erstellen eines digitalen Modells einer Kopplungsstruktur, die eingerichtet ist, die zahnmedizinische Vorrichtung und die Übertragungsschale lösbar zu koppeln;
- Herstellen der zahnmedizinischen Vorrichtung mit Übertragungsschale und der Kopplungsstruktur basierend auf dem digitalen Modell der zahnmedizinischen Vorrichtung mit Übertragungsschale und der Kopplungsstruktur mittels eines additiven Herstellungsverfahrens.

Das Modell des oder der Zähne kann bereits vorhanden sein oder aber mittels vorhandener Daten berechnet werden. Hierbei kann das Modell des oder der Zähne auch zwei oder mehrere Teilmodelle umfassen. Ein erstes Teilmodell kann zum Beispiel ein sogenanntes Malokklusions Modell sein, das ein digitales Modell der Zähne in einer Fehlstellung zeigt. Das Modell der Übertragungsschale wird dann mittels dieses Malokklusions Modells erstellt, damit die Übertragungsschale auf die zum Zeitpunkt der Fixierung der zahnmedizinischen Vorrichtung noch fehlgestellten Zähne passt. Ein zweites Teilmodell kann zum

Beispiel ein sogenanntes Set-up Modell umfassen. Das Set-up Modell zeigt die Zähne in einer beabsichtigten Endstellung oder einer Zwischenstellung, die durch die zahnmedizinische Vorrichtung erreicht werden soll. Die zahnmedizinische Vorrichtung muss in diesem Fall eine Kraft auf die Zähne übertragen, so dass diese sukzessive in die beabsichtigte Zwischen- oder Endstellung überführt werden. Die zahnmedizinische Vorrichtung wird mittels des Set-up Modells somit so erstellt, dass die zahnmedizinische Vorrichtung die erforderlichen Kräfte auf die Zähne überträgt. Dies kann zum Beispiel mittels Simulation geschehen, die die Kräfte in Abhängigkeit von Geometrie, Struktur und Material der zahnmedizinischen Vorrichtung berechnet. Auch hier ist aber das Malokklusion Modell bei der Erstellung des digitalen Modells der zahnmedizinischen Vorrichtung insofern zu beachten, dass es bei der Positionierung und Fixierung der zahnmedizinischen Vorrichtung nicht zu Konflikten kommt. Die digitalen Modelle der zahnmedizinischen Vorrichtung, der Kopplungsstruktur unter Übertragungsschale sowie die basierend auf diesen digitalen Modell hergestellte zahnmedizinische Vorrichtung mit Übertragungsschale müssen gewährleisten, dass die zahnmedizinische Vorrichtung mittels der Übertragungsschale zum Beispiel mittels der oder den Anpressmulden an die jeweiligen Zähne angedrückt und mittels eines Klebers fixiert werden kann.

Das Verfahren zur Herstellung der zahnmedizinischen Vorrichtung mit Übertragungsschale kann optional die weiteren Schritte umfassen:
- Erheben von digitalen Daten des zumindest einen Zahns, vorzugsweise zwei Zähne, des Kiefers;
- Erstellen des Modells des zumindest einen Zahns, vorzugsweise zwei Zähne, des Kiefers basierend auf den digitalen Daten der zumindest zwei Zähne des Kiefers.

Zusätzlich kann das Verfahren zur Herstellung der zahnmedizinischen Vorrichtung mit Übertragungsschale die Schritte umfassen:
- Erheben von digitalen Daten eines Gebisses, das den zumindest einen Zahn, vorzugsweise zwei Zähne, umfasst, und zugehöriger Kiefer;
- Erstellen eines Modells eines Gebisses und der zugehörigen Kiefer, basierend auf den digitalen Daten des Gebisses und der Kiefer.

Das Modell des Gebisses inklusive der Zähne kann dazu verwendet werden, die Übertragungsschale und die zahnmedizinische Vorrichtung so anzupassen, dass eine Positionierung der Übertragungsschale mit der zahnmedizinischen Vorrichtung zum Beispiel durch das Schließen des Gebisses erfolgen kann.

Die digitalen Daten des oder der Zähne und/oder des Gebisses können mittels dreidimensionalen optischen Scans der Zähne erhoben werden. Digitale Daten des Kiefers oder der Kiefer können z.B. mittels vorhandener Röntgendaten bestimmt werden oder mittels neuer Röntgenaufnahmen erzeugt werden.

Gemäß einem weiteren Aspekt wird ein Herstellungsgerät zur Herstellung einer zahnmedizinischen Vorrichtung mit Übertragungsschale zur Verfügung gestellt. Das Herstellungsgerät umfasst eine Speichereinheit, eine Modelliereinheit und eine Herstellungseinheit. Die Speichereinheit ist ausgestaltet, digitale Daten eines Modells von zumindest einem Zahn, vorzugsweise zwei Zähnen, eines Kiefers abzuspeichern. Die Modelliereinheit ist ausgestaltet, ein digitales Model der zahnmedizinischen Vorrichtung mit Übertragungsschale und eines Kopplungselementes, das die zahnmedizinische Vorrichtung lösbar mit der Übertragungsschale verbindet, basierend auf dem Model des zumindest einen Zahns, vorzugsweise zwei Zähne, des Kiefers zu erstellen. Die Herstellungseinheit ist dazu ausgestaltet, die zahnmedizinische Vorrichtung mit Übertragungsschale und Kopplungsstruktur basierend auf dem digitalen Modell der zahnmedizinischen Vorrichtung mit Übertragungsschale und der Kopplungsstruktur mittels eines additiven Herstellungsverfahrens herzustellen.

Die Speichereinheit, Modelliereinheit und Herstellungseinheit können jeweils unabhängige Prozessoren oder Mikroprozessoren sowie ein oder mehrere Speicherelemente umfassen. Es ist alternativ aber auch möglich, dass ein oder mehrere Prozessoren oder Mikroprozessoren sowie Speicherelemente gemeinsam genutzt werden. Das Herstellungsgerät kann eine integrierte Einheit sein oder auch auf mehrere Einheiten verteilt sein. Es ist auch möglich, dass gewisse Funktionalitäten (z.B. Modellierung), die zur Ausführung lediglich einen oder mehrere Prozessoren oder Mikroprozessoren sowie Speicherelemente benötigen, durch einen externen Computer übernommen werden. Dieser externe Computer könnte in diesem Fall über eine geeignete Schnittstelle mit der Herstellungseinheit verbunden sein.

Das Herstellungsgerät kann optional eine Untersuchungseinheit und eine Verarbeitungseinheit umfassen. Die Untersuchungseinheit ist ausgestaltet die digitalen Daten des zumindest einen Zahns, vorzugsweise zwei Zähne, des Kiefers zu erheben. Die Verarbeitungseinheit ist ausgestaltet, das Model des zumindest einen Zahns, vorzugsweise zwei Zähne, des Kiefers basierend auf den digitalen Daten des zumindest eines Zahns, vorzugsweise zwei Zähne, des Kiefers zu erstellen.

Die Untersuchungseinheit umfasst z.B. einen optischen Scanner zur Ausmessung der Zähne. Für diese Zwecke stehen z.B. digitale Kameras, 3D-Scanner usw. zur Verfügung. Die Untersuchungseinheit kann zusätzlich z.B. ein Röntgengerät aufweisen, das zur Erhebung von Daten des Kieferknochens und auch der Zähne verwendet werden kann. Die Verarbeitungseinheit kann ein oder mehrere Prozessoren oder Mikroprozessoren sowie Speicherelemente umfassen. Diese Prozessoren oder Mikroprozessoren sowie Speicherelemente können ganz oder teilweise von der Speichereinheit, Modelliereinheit oder Herstellungseinheit genutzt werden. Die Verarbeitungseinheit kann wiederum auf einem externen Computer realisiert werden. Dieser externe Computer kann identisch sein mit dem zuvor in Hinblick auf das Herstellungsgerät beschriebenen externen Computer.

Es ist eine weitere Aufgabe der vorliegenden Erfindung, ein verbessertes Computerprogrammprodukt zur Herstellung des Retentionsgerätes zur Verfügung zu stellen.

Gemäß einem weiteren Aspekt wird ein Computerprogrammprodukt zur Verfügung gestellt. Das Computerprogrammprodukt kann direkt in eine Speichereinheit geladen werden und umfasst Softwareabschnitte, mit denen das Verfahren gemäß Anspruch 9 ausgeführt werden kann, wenn das Computerprogrammprodukt auf einem Herstellungsgerät gemäß Anspruch 10 ausgeführt wird.

### Kurze Beschreibung der Abbildungen

Diese und andere Aspekte der Erfindung werden im Detail in den Abbildungen wie folgt gezeigt.
Fig. 1 zeigt eine perspektivische Ansicht einer schematischen Darstellung einer Ausführungsform der Übertragungsschale mit zahnmedizinischer Vorrichtung
Fig. 2 zeigt eine schematische Darstellung des Querschnitts durch die Übertragungsschale und die zahnmedizinische Vorrichtung, der in Fig. 1 mit dem Buchstaben B gekennzeichnet ist
Fig. 3 zeigt eine schematische Darstellung einer Vergrößerung des kreisförmigen Bereichs, der in der Fig. 2 mit dem Buchstaben C gekennzeichnet ist
Fig. 4 zeigt eine schematische Darstellung des in der Fig. 3 dargestellten Bereiches ohne Druckbelastung
Fig. 5 zeigt eine schematische Darstellung des in der Fig. 3 dargestellten Bereiches mit und ohne Druckbelastung
Fig. 6 zeigt eine schematische Darstellung einer Vergrößerung des kreisförmigen Bereichs, der in der Fig. 2 mit dem Buchstaben F gekennzeichnet ist
Fig. 7 zeigt eine schematische Darstellung einer Vergrößerung des kreisförmigen Bereichs, der in der Fig. 2 mit dem Buchstaben G gekennzeichnet ist
Fig. 8 zeigt eine schematische Darstellung einer alternativen Ausführungsform der Übertragungsschale mit zahnmedizinischer Vorrichtung
Fig. 9 zeigt eine schematische Darstellung einer weiteren alternativen Ausführungsform der Übertragungsschale mit zahnmedizinischer Vorrichtung
Fig. 10 zeigt eine schematische Darstellung eines Verfahrens zur Herstellung einer Übertragungsschale mit zahnmedizinischer Vorrichtung gemäß einer Ausführungsform
Fig. 11 zeigt eine schematische Darstellung eines Herstellungsgeräts zur Herstellung einer Übertragungsschale mit zahnmedizinischer Vorrichtung

### Detaillierte Beschreibung der Ausführungsbeispiele

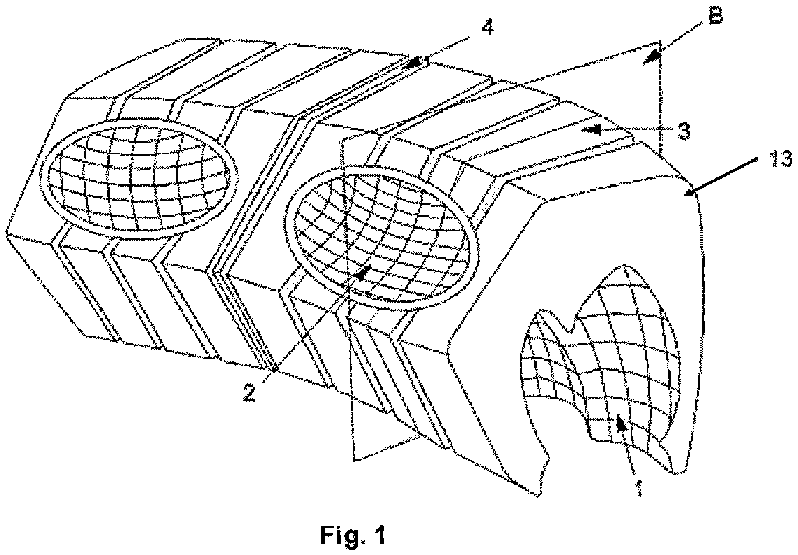

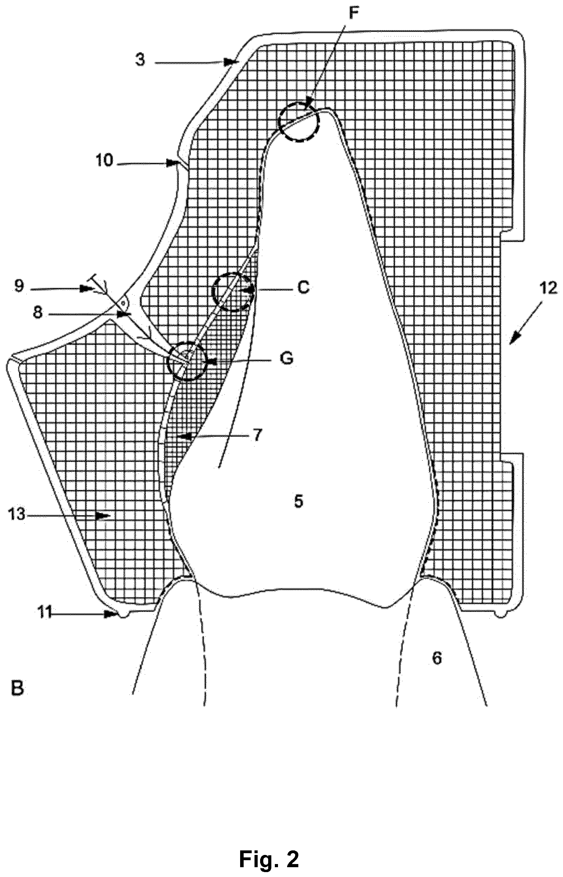

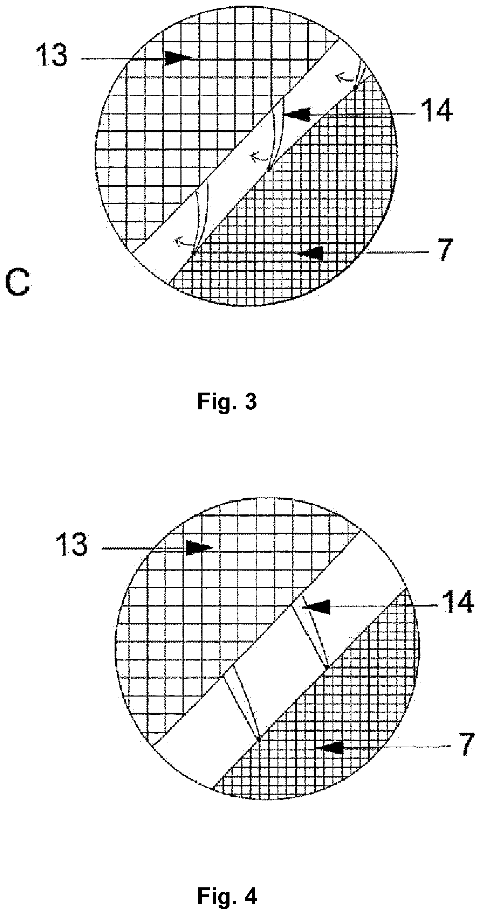

Fig. 1 zeigt eine perspektivische Ansicht einer schematischen Darstellung einer Ausführungsform der Übertragungsschale 13 mit zahnmedizinischer Vorrichtung 7. Die Übertragungsschale 13 mit zahnmedizinischer Vorrichtung 7 ist in einer perspektivischen Außenansicht gezeigt. Die zahnmedizinische Vorrichtung 7 ist in dieser Ansicht nicht zu sehen. Die perspektivische Außenansicht zeigt einen Ausschnitt des Mittelteils der Übertragungsschale 13. Die Übertragungsschale 13 weist eine Mittellinie 4 auf, die als schmales Mantelsegment der Mantelstruktur 3 ausgeführt ist (siehe Figur 2). Die Übertragungsschale 13 weist zudem zwei Anpressmulden 2 sowie mehrere breitere Mantelsegmente der Mantelstruktur 3 auf. Die Anpressmulden 2 ermöglichen eine kontrollierte Positionierung und Fixierung der zahnmedizinischen Vorrichtung 7 auf den Zähnen 5 (siehe auch Figuren 3-5 und die zugehörige Beschreibung). Die Mantelsegmente der Mantelstruktur 3 sind in Querrichtung der Übertragungsschale 13 ausgeführt, so dass eine Verschiebung der Mantelsegmente beim Ablösen der Übertragungsschale 13 in Querrichtung erleichtert wird. Die Innenfläche der Übertragungsschale 1 ist als perspektivische Darstellung auf der rechten Seite zu sehen. Die Innenfläche der Übertragungsschale 1 ist dabei an die Struktur der Zähne 5 angepasst. Mit dem Buchstaben B ist eine Schnittfläche durch die Übertragungsschale 13 mit zahnmedizinischer Vorrichtung 7 bezeichnet, die in Figur 2 beschrieben wird.

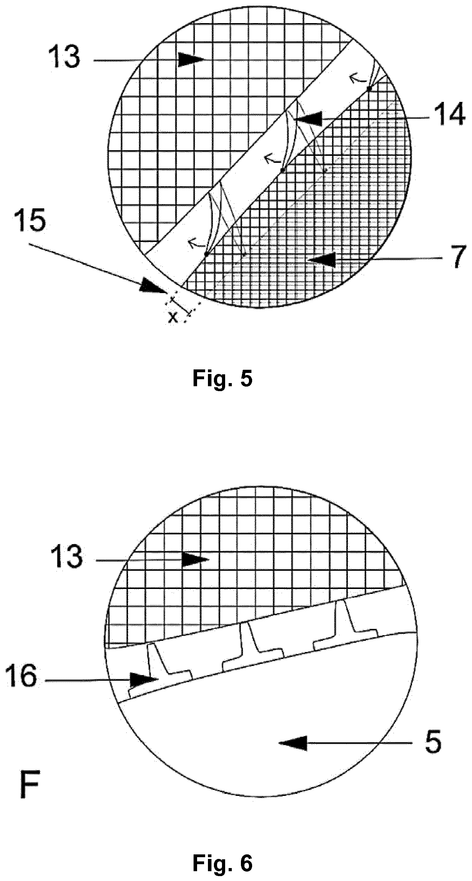

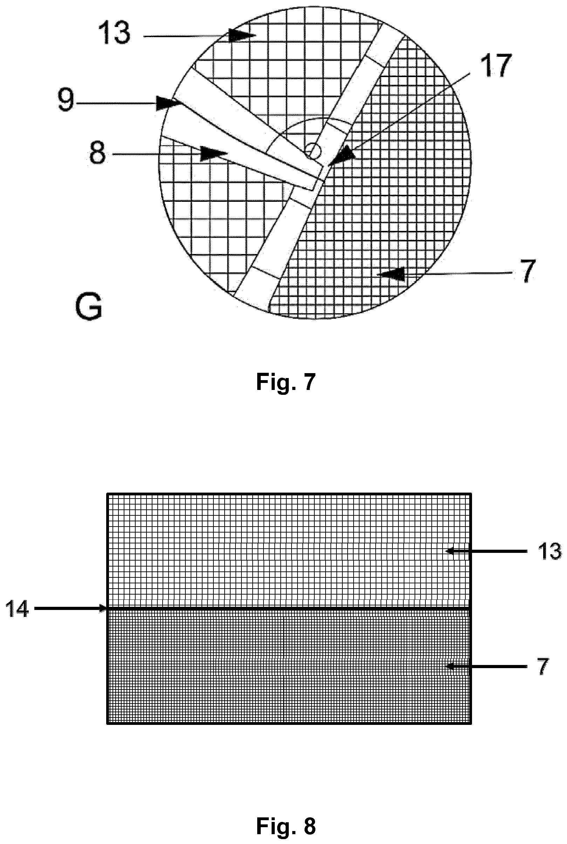

Fig. 2 zeigt eine schematische Darstellung des Querschnitts durch die Übertragungsschale 13 und die zahnmedizinische Vorrichtung 7, der in Fig. 1 mit dem Buchstaben B gekennzeichnet ist. Die Übertragungsschale 13 und die zahnmedizinische Vorrichtung 7 umfassen dabei anders als in Figur 1 dargestellt einen Zahn 5. Der Zahn 5 wird durch Zahnfleisch 6 und einen Zahnhalteapparat (nicht dargestellt) gehalten. Die Übertragungsschale 13 weist eine Mantelstruktur 3 mit höherer Festigkeit oder Steifigkeit als eine Innenstruktur der Übertragungsschale 13 auf. Die Mantelstruktur 3 weist auf einer vestibulären Seite ein Polymerisationsfenster 12 auf, durch das ein Kleber, der auf dem Zahn 5 oder das zu befestigen Element aufgebracht wird, mittels durch den Zahn 5 eingestrahltem UV-Licht ausgehärtet wird, um die zahnmedizinische Vorrichtung 7 mit dem Zahn 5 dauerhaft zu verbinden. Die Mantelstruktur 3 weist zudem Übergänge 10 zwischen Mantelstruktur 3 und Anpressmulde 2 (siehe Figur 1) auf. Der oder die Übergänge 10 sind dabei so ausgestaltet, dass möglichst geringe Kräfte von einer Anpressmulde 2 auf die Mantelstruktur 3 übertragen werden, wenn ein Druck auf die Anpressmulde 2 ausgeübt wird. Der oder die Übergänge 10 bewirken somit eine mechanische Entkopplung zwischen Anpressmulde 2 und Mantelstruktur 3. Die Anpressmulde 2 umfasst ein Kraftübertragungssegment 8, das ausgestaltet ist, eine durch zum Beispiel einen Finger, der auf die Anpressmulde 2 drückt, übertragene Kraft auf die zahnmedizinische Vorrichtung 7 so auszuüben, dass die Kraft vorzugsweise senkrecht oder orthogonal auf die zu bekleben der Zahnoberfläche wirkt. Die Kraft wird dabei vorzugsweise im Mittelpunkt der Klebestelle pro Zahn 5 und pro befestigendes Stück der zahnmedizinischen Vorrichtung 7. Ein Beispiel für eine solche zahnmedizinische Vorrichtung 7 können mehrere über den Zahn 5 verlaufende Stränge beim skelettierten Retainer im Falle eines Tiefen Bisses sein. Eine detailliertere Darstellung des Kraftübertragungssegments ist in Figur 7 gezeigt. Zwischen der Innenstruktur der Übertragungsschale 13 und der zahnmedizinischen Vorrichtung 7 ist eine Kopplungsstruktur 14 vorgesehen, die in den Figuren 3-5 im Detail gezeigt. Die Kopplungsstruktur 14 ermöglicht es, dass die Übertragungsschale 13 nach Positionierung und Fixierung der zahnmedizinischen Vorrichtung 7 auf den Zähnen 5 von der zahnmedizinischen Vorrichtung 7 abgelöst werden kann. Die Übertragungsschale Ziffer 13 weist zudem in dieser Ausführungsform optionale Stützelemente 16 auf, mit denen die Übertragungsschale 13 auf einer Oberfläche des Zahns 5 ruht. Die Stützelemente 16 sind im Detail in Figur 6 dargestellt. Die Übertragungsschale 13 weist in dieser Ausführungsform zusätzlich optionale Noppen 11 auf, die auf der Unterseite der Mantelstruktur 3 angebracht sind (in Figur 2 in Richtung Zahnfleisch 6). Diese Noppen können dazu verwendet werden, um die Übertragungsschale 13 mit zahnmedizinischer Vorrichtung 7 abzusetzen. Solche Noppen 11 können alternativ oder zusätzlich auch auf anderen Oberflächen der Mantelstruktur 3 vorgesehen sein, sofern diese Oberflächen geeignet sind die Übertragungsschale 13 mit zahnmedizinischer Vorrichtung 7 abzusetzen. Die Mantelstruktur 3, die Innenstruktur der Übertragungsschale Ziffer 13, die Kopplungsstruktur 14 und die zahnmedizinische Vorrichtung 7 bestehen in dieser Ausführungsform im wesentlichen aus dem gleichen Material PMMA. Das PMMA ist dabei im Bereich der zahnmedizinischen Vorrichtung 7 mittels eines thermischen Druckverfahrens so hergestellt worden, dass es eine möglichst hohe Festigkeit (Dichte) und Steifigkeit aufweist. Die Kopplungsstruktur 14 ist so ausgeführt, wie in Figur 3 näher beschrieben, dass die zahnmedizinische Vorrichtung 7 vorgespannt werden kann, ohne dass Ablösen der Übertragungsschale 13 von der zahnmedizinischen Vorrichtung 7 zu behindern. Die Festigkeit der Kopplungsstruktur 14 ist somit viel geringer als die Festigkeit der zahnmedizinischen Vorrichtung 13 und geringer als die Festigkeit der Innenstruktur der Übertragungsschale 13. Die Innenstruktur der Übertragungsschale 13 weist eine Wabenstruktur auf, sodass sich die Übertragungsschale 13 beim Ablösen von der zahnmedizinischen Vorrichtung 7 relativ leicht verformen lässt. Die Mantelstruktur 3 ist schalenartig um die Wabenstruktur der Übertragungsschale 13 angebracht, um die Handhabung der Übertragungsschale 13 mit zahnmedizinischer Vorrichtung 7 zu erleichtern.

Fig. 3 zeigt eine schematische Darstellung einer Vergrößerung des kreisförmigen Bereichs, der in der Fig. 2 mit dem Buchstaben C gekennzeichnet ist. Die Übertragungsschale 13 ist mittels der Kopplungsstruktur 14 lösbar mit der zahnmedizinischen Vorrichtung 7 gekoppelt. Die Kopplungsstruktur 14 ist in dieser Ausführungsform als federnde Verbinder ausgeführt, die sich in Richtung der zahnmedizinischen Vorrichtung 7 verjüngen, so dass sie nahezu nur punktförmig oder entlang einer Linie (lamellenartiger federnder Verbinder) mit der zahnmedizinischen Vorrichtung 7 verbunden sind. Die federnde Verbinder werden beim Auftreffen der zahnmedizinischen Vorrichtung 7 auf den Zahn 5 so ausgelenkt, dass die Übertragungsschale 13 eine Kraft auf die zahnmedizinische Vorrichtung 7 ausübt. Dieser Vorgang wird in den Figuren 4 und 5 weiter erläutert.

Fig. 4 zeigt eine schematische Darstellung den in der Fig. 3 dargestellten Bereiches ohne Druckbelastung. Dieser Zustand ist gegeben, bevor die Übertragungsschale 13 mit der zahnmedizinischen Vorrichtung 7 auf die Zähne 5 aufgepresst wird. Die Übertragungsschale 13 übt in diesem Zustand keine Kraft auf die zahnmedizinische Vorrichtung 7 aus. Fig. 5 zeigt eine schematische Darstellung des in der Fig. 3 dargestellten Bereiches, in der die Zustände mit Anpressdruck und ohne Anpressdruck miteinander verglichen werden. Der über die Anpressmulde 2 mittels zum Beispiel eines Fingers ausgeübte Druck führt dazu, dass die federnden Verbinder der Kopplungsstruktur 14 gestaucht werden. Diese Stauchung 15 während der Übertragung verursacht das die Distanz zwischen der zahnmedizinischen Vorrichtung 7 Übertragungsschale 13 um einen Wert x vermindert wird. Die fehlenden Verbinder verharren bis zum Ablösen der Übertragungsschale 13 in der gestauchten Position und üben somit eine Kraft auf die zahnmedizinische Vorrichtung 7 aus, sodass diese vorgespannt wird. Diese Vorspannung sorgt dafür, dass die zahnmedizinische Vorrichtung 7 nach dem Verkleben mit den Zähnen 5 eine Kraft auf die Zähne 5 ausübt. Diese Kraft kann mittels Simulation der Übertragungsschale 13, der Kopplungsstruktur 14 und der zahnmedizinischen Vorrichtung 7 gezielt eingestellt werden.

Fig. 6 zeigt eine schematische Darstellung einer Vergrößerung des kreisförmigen Bereichs, der in der Fig. 2 mit dem Buchstaben F gekennzeichnet ist. Die Übertragungsschale 13 ist mit Stützelementen 16 ausgestattet, die die Übertragungsschale 13 auf dem jeweiligen Zahn 5 abstützen. Die Stützelemente 16 sind dabei vorzugsweise so ausgestaltet, dass keine oder nur geringe Kräfte zwischen der Übertragungsschale 13 und dem Zahn 5 wirken. Die Stützelemente 16 sind des Weiteren vorzugsweise so ausgestaltet, dass die Übertragungsschale 13 nicht an den Zähnen 5 haftet.

Fig. 7 zeigt eine schematische Darstellung einer Vergrößerung des kreisförmigen Bereichs, der in der Fig. 2 mit dem Buchstaben G gekennzeichnet ist. Es ist eine Vergrößerung des Kraftübertragungssegments 8 gezeigt, dass eine größere Dichte als die Wabenstruktur der Innenstruktur der Übertragungsschale 13 aufweist. Die mechanischen Eigenschaften des Kraftübertragungssegments 8 sowie die Geometrie sind in diesem Fall so ausgeführt, dass eine durch einen Finger auf der Anpressmulde 2 ausgeübte Kraft (Kraftvektor 9) senkrecht auf die zahnmedizinische Vorrichtung 7 übertragen wird. Ein Endstück des Kraftübertragungssegments 8 wirkt dabei am Übergang 17 zwischen Kraftübertragungssegment 8 und zahnmedizinische Vorrichtung 7 mechanisch auf die zahnmedizinische Vorrichtung 7 ein.

Fig. 8 zeigt eine schematische Darstellung einer alternativen Ausführungsform der Übertragungsschale 13 mit zahnmedizinischer Vorrichtung 7. Die zahnmedizinische Vorrichtung 7 besteht in dieser Ausführungsform aus einem ersten Material (PMMA) und die Übertragungsschale 13 aus einem zweiten Material (Silikon). Das PMMA ist steif und kann nur mit relativ großer Kraft verformt werden. Das Silikon ist relativ leicht verformbar und insbesondere für UV-Licht transparent. Das Silikon wird in einem thermischen Druckverfahren so auf die Oberfläche der zahnmedizinischen Vorrichtung 7 aufgebracht, dass das Silikon keine dauerhafte Verbindung mit der zahnmedizinischen Vorrichtung 7 eingeht. Die Kopplungsstruktur 14 ist in dieser Ausführungsform somit als Trennschicht zwischen der Übertragungsschale 13 und der zahnmedizinischen Vorrichtung 7 ausgeführt. Der Kleber zur Befestigung der zahnmedizinischen Vorrichtung 7 auf dem oder den Zähnen 5 kann mittels UV-Licht durch das Silikon der Übertragungsschale 13 ausgehärtet werden. Die Flexibilität des Silikons und die mangelnde Verbindung zwischen Silikon und PMMA der zahnmedizinischen Vorrichtung 7 ermöglichen es, die Übertragungsschale 13 mit geringer Kraft von der auf den Zähnen 5 befestigten zahnmedizinischen Vorrichtung 7 zu lösen.

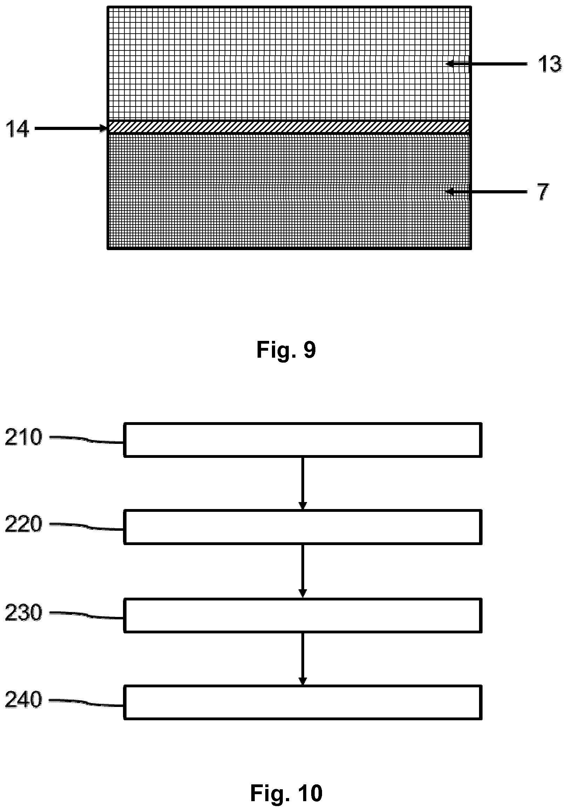

Fig. 9 zeigt eine schematische Darstellung einer weiteren alternativen Ausführungsform der Übertragungsschale 13 mit zahnmedizinischer Vorrichtung 7. Die zahnmedizinische Vorrichtung 7 besteht aus PMMA, das mittels thermischen Druckverfahrens hergestellt wird. Auf die Oberfläche der zahnmedizinischen Vorrichtung 7 ist eine Kopplungsstruktur 14 in Form einer dünnen Silikonschicht ebenfalls mittels thermischen Druckverfahren aufgebracht. Die Übertragungsschale 13 wurde anschließend auf der dünnen Silikonschicht als wabenartige Struktur aus PMMA aufgebracht. Die Zusammensetzung des PMMA der Übertragungsschale 13 wurde dabei bei dem thermischen Druckverfahren im Vergleich zum PMMA der zahnmedizinischen Vorrichtung 7 so verändert, dass das PMMA der Übertragungsschale 13 elastischer ist als das PMMA der zahnmedizinischen Vorrichtung 7. Die Verformbarkeit der Übertragungsschale 13 wird somit durch die wabenartige Struktur und die geänderten Materialeigenschaften des PMMA gewährleistet. Das Silikon der Kopplungsstruktur 14 ermöglicht es, die Übertragungsschale 13 aufgrund der fehlenden Verbindung zwischen dem Silikon der Kopplungsstruktur 14 und dem PMMA der zahnmedizinischen Vorrichtung 7 auf einfache Weise von der zahnmedizinischen Vorrichtung 7 zu lösen. Sollten Reste von Silikon auf der zahnmedizinischen Vorrichtung 7 verbleiben, so können diese mittels Polierens von der Oberfläche der zahnmedizinischen Vorrichtung 7 entfernt werden. Des Weiteren kann die Oberfläche der zahnmedizinischen Vorrichtung 7 durch Polieren geglättet werden.

Fig. 10 zeigt eine schematische Darstellung eines Verfahrens zur Herstellung einer zahnmedizinischen Vorrichtung 7 mit Übertragungsschale 13 gemäß einer Ausführungsform. In Schritt 210 werden digitale Daten mittels eines optischen Scanners und eines Röntgengerätes über die Zähne 5 und den Kieferknochen erhoben. In Schritt 220 wird ein digitales Model der Zähne 5 und des Kiefers basierend auf den erhobenen digitalen Daten erzeugt. Basierend auf dem digitalen Model der Zähne 5 und des Kiefers wird in Schritt 230 ein digitales Model der zahnmedizinischen Vorrichtung 7 mit Übertragungsschale 13 inklusive Kopplungsstruktur 14 erzeugt, wobei die Kopplungsstruktur 14 die Übertragungsschale 13 und die zahnmedizinische Vorrichtung 7 lösbar miteinander koppelt. Im Schritt 240 wird die zahnmedizinischen Vorrichtung 7 mit Übertragungsschale 13 inklusive Kopplungsstruktur 14 mittels eines additiven Verfahrens hergestellt. Das additive Herstellungsverfahren kann zum Beispiel das Drucken eines flüssigen Bindemittels in einem Bett von pulverförmigen Kompositmaterial umfassen. Die Menge und die Art des flüssigen Bindemittels werden dabei in Abhängigkeit von der zu druckenden Struktur angepasst. Das Bindemittel zum Drucken der zahnmedizinischen Vorrichtung 7 ergibt mit dem Pulver des Kompositmaterials nach dem Aushärten eine steife Struktur, die den Zähnen 5 ausreichend Halt gibt. Beim Drucken der Kopplungsstruktur 14 wird hingegen ein zweites flüssiges Bindemittel verwendet, das sich nach dem Aushärten unter Einstrahlung von UV-Licht zersetzt. Das dritte flüssige Bindemittel ist wie vorzugsweise auch das Kompositmaterial transparent für UV-Licht und bildet nach dem Aushärten eine flexible Verbindung zwischen den Partikeln des Kompositmaterials. Die Übertragungsschale 13 kann somit nach dem Aushärten des Klebers mittels UV-Licht zur Fixierung der zahnmedizinischen Vorrichtung 7 aufgrund des zersetzten Bindemittels und der Elastizität der Übertragungsschale 13 von der zahnmedizinischen Vorrichtung 7 abgeschält werden. Alternativ könnte auch ein flüssiges Bindemittel verwendet werden, wobei die Viskosität des Bindemittels so variiert wird, dass die Partikel des Kompositmaterials im Bereich der Kopplungsstruktur 14 nur eine lose Bindung miteinander eingehen. Die Festigkeit des Materials könnte somit über die Viskosität des Bindemittels gesteuert werden.

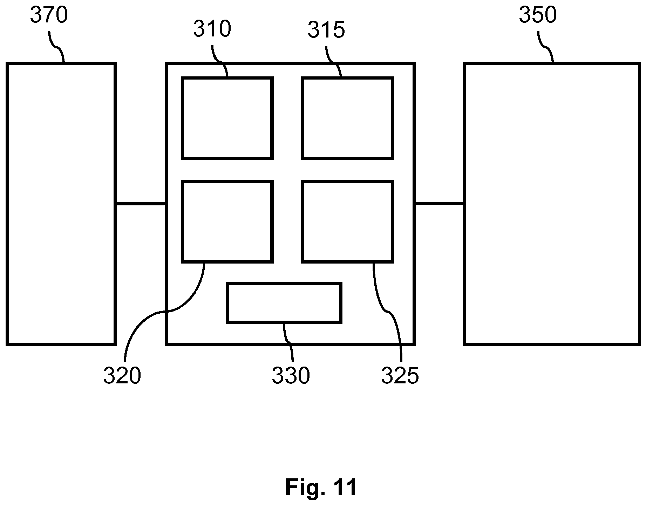

Fig. 11 zeigt eine schematische Darstellung eines Herstellungsgeräts zur Herstellung einer zahnmedizinischen Vorrichtung 7 mit Übertragungsschale 13. Das Herstellungsgerät weist eine Untersuchungseinheit 370 auf, die einen optischen Laserscanner zur Aufnahme der dreidimensionalen Struktur der Zähne 5 und ein Röntgengerät zur Aufnahme der dreidimensionalen Struktur des jeweiligen Kieferknochens und optional auch der Zähne 5 aufweist. Die mittels der Untersuchungseinheit gewonnenen vorzugsweise digitalen Daten werden mittels einer Schnittstelle an eine Speichereinheit 310 des Herstellungsgerätes weitergeleitet. Die in der Speichereinheit abgespeicherten Daten werden von einer Verarbeitungseinheit 320 dazu verwendet ein dreidimensionales Modell vorzugsweise aller Zähne 5 eines Kiefers und des zugehörigen Kiefers zu erstellen. Ggfs. wird auch ein Modell der Zähne 5 des anderen Kiefers und des zugehörigen anderen Kiefers erstellt, um einen Kauvorgang simulieren zu können. Die Verarbeitungseinheit 320 weist zu diesem Zweck zumindest einen Prozessor auf, der entsprechende Programmierbefehle abarbeitet, die ebenfalls in der Speichereinheit 310 abgespeichert sind. Das dreidimensionale Modell der Zähne 5 und des Kiefers wird mittels einer Anzeigeeinheit 325 (hochauflösender Bildschirm, Touchscreen...) einem Nutzer des Herstellungsgerätes präsentiert. Der Nutzer kann nun z.B. manuell einen oder mehrere Zähne 5 mittels einer Eingabeeinheit 330 (Tastatur, Maus, Touchscreen...) markieren, die mittels der zahnmedizinischen Vorrichtung 7 gekoppelt werden sollen. Des Weiteren kann der Nutzer weitere Randbedingungen wie z.B. eine maximale Ausdehnung der zahnmedizinischen Vorrichtung 7 in Richtung Zunge die Berücksichtigung eines tiefen Bisses im Bereich des Unterkiefers, durch Parodontose bedingte Veränderungen im betroffenen Kieferbereich, die Farbgestaltung der zahnmedizinischen Vorrichtung 7, Material der zahnmedizinischen Vorrichtung 7 und zum Beispiel eine Zugabe von mundraumstärkenden Substanzen eingeben. Alternativ oder zusätzlich können aber auch in der Speichereinheit Anamnesedaten auch über den anderen Kiefer abgelegt sein, so dass die Modelliereinheit 315 wesentliche Randbedingungen z.B. mittels einer Simulation der Kaubewegung selbst errechnen kann. Zudem kann die Modelliereinheit 315 basierend auf dem Modell der Zähne 5 und des Kiefers in die Lage versetzt sein, die zahnmedizinische Vorrichtung 7 automatisch anzupassen. Die Modelliereinheit 315 arbeitet basierend auf den manuellen Eingaben und/oder der gespeicherten Daten ein erstes digitales Modell der zahnmedizinischen Vorrichtung 7 aus und präsentiert dieses mit oder ohne das Modell der Zähne 5 und des Kiefers dem Nutzer mittels der Anzeigeeinheit 325. Der Nutzer kann nun manuelle Veränderungen am Modell der zahnmedizinischen Vorrichtung 7 vornehmen. Das Modell der zahnmedizinischen Vorrichtung 7 wird sodann z.B. sukzessive im Hinblick auf Stabilität der Zähne 5, ausgeübte Rückstellkräfte und Reizkräfte auf den Kieferknochen optimiert. Dabei prüft die Modelliereinheit 315 zudem, ob ggfs. eine oder mehrere der manuell eingegebenen Randbedingungen dafür sorgen, dass vorgegebene Grenzwerte bzgl. der Stabilität der Zähne 5 oder der Reizung des Kieferknochens unterschritten werden. Ist dies der Fall, wird der Nutzer auf das Unterschreiten des oder der Grenzwerte aufmerksam gemacht. Die Modelliereinheit 315 kann zudem z.B. aufgrund von selbstlernenden Algorithmen oder basierend auf Vergleichen mit abgespeicherten Daten von Zahn- und Kieferstrukturen automatisch Vorschläge zur Änderung der Randbedingungen machen. Zudem können bei z.B. ästhetisch bedingten Randbedingungen Vorschläge bzgl. des Materials der zahnmedizinischen Vorrichtung 7 gemacht werden. Das optimierte Modell der zahnmedizinischen Vorrichtung 7 kann dann mittels der Anzeigeeinheit 325 dem Nutzer präsentiert werden und von diesem manuell mittels der Eingabeeinheit 330 freigegeben oder aber nachbearbeitet werden. Strukturell wichtige Elemente des der zahnmedizinischen Vorrichtung 7 werden dabei vorzugsweise farblich kenntlich gemacht, so dass der Nutzer dies bei der Nachbearbeitung berücksichtigen kann. Nach erfolgter Freigabe des Modells der zahnmedizinischen Vorrichtung 7 werden Modelle der Kopplungsstruktur 14 und der Übertragungsschale 13 erstellt, die an die Struktur der Zähne 5 und an die Struktur der zahnmedizinischen Vorrichtung 7 angepasst sind. Bei der Erstellung des digitalen Modells der Übertragungsschale 13 und der Kopplungsstruktur 14 kann berücksichtigt werden, dass die Übertragungsschale 13 über die Kopplungsstruktur 14 nach Fixierung der zahnmedizinischen Vorrichtung 7 eine Kraft auf die zahnmedizinische Vorrichtung 7 ausüben soll. Im Rahmen der Erstellung des digitalen Modells der Übertragungsschale 13 und der Kopplungsstruktur 14 kann des Weiteren berücksichtigt werden wie groß die Kraft sein darf, die benötigt wird, um die Übertragungsschale 13 von der zahnmedizinischen Vorrichtung 7 abzulösen. Die digitalen Daten der optimierten der zahnmedizinischen Vorrichtung 7 sowie der entsprechend angepassten Übertragungsschale 13 mit Kopplungsstruktur 14 können entweder manuell oder auch über eine weitere Schnittstelle automatisch an eine Herstellungseinheit 350 weitergegeben werden. Die Herstellungseinheit 350 umfasst eine erste Druckeinheit zur Fertigung der zahnmedizinischen Vorrichtung 7 auf Basis von Kompositpartikeln und eine zweite Druckeinheit zum thermischen dreidimensionalen Drucken von PMMA und/oder Silikon. Die zahnmedizinischen Vorrichtung 7 mit Übertragungsschale 13 und Kopplungsstruktur 14 wird in Abhängigkeit von der Materialwahl von der jeweiligen Druckeinheit basierend auf dem digitalen Modell produziert. Dies kann er mittels eines einzigen Produktionsschrittes erfolgen oder in zwei oder drei Produktionsschritten, in denen Teile der zahnmedizinischen Vorrichtung 7 bzw. der Übertragungsschale 13 nacheinander oder abwechselnd mittels der ersten und zweiten Druckeinheit hergestellt werden.

Es ist eine Idee der vorliegenden Erfindung, beliebige zahnmedizinische Vorrichtungen 7 zusammen mit einer Übertragungsschale 13 in einem zusammenhängenden additiven Herstellungsverfahren zu produzieren, so dass die zahnmedizinische Vorrichtung 7 nach Positionierung und Fixierung auf dem Zahn 5 oder den Zähnen 5 mittels einer Kopplungsstruktur 14 von der Übertragungsschale 13 gelöst werden kann. Die Materialien und die mechanische Struktur der zahnmedizinischen Vorrichtung 7, der Kopplungsstruktur 14 und der Übertragungsschale 13 können dabei in Abhängigkeit von der jeweiligen Anwendung individuell angepasst werden.
Für additive Herstellungsverfahren wie das dreidimensionalen thermische Druckens ist die Komplexität der Struktur nicht von wesentlicher Bedeutung sodass mittels eines entsprechend ausgerüsteten Herstellungsgerätes eine Fertigung vor Ort z.B. in einer zahnmedizinischen Praxis ermöglicht wird.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Liste der Bezugszeichen

- 1: Innenfläche der Übertragungsschale
- 2: Anpressmulde
- 3: Mantelstruktur
- 4: Mittellinie
- 5: Zahn
- 6: Zahnfleisch
- 7: zahnmedizinische Vorrichtung
- 8: Kraftübertragungssegment
- 9: Kraftvektor
- 10: Übergang Mantelstruktur / Anpressmulde
- 11: Noppe zum Absetzen
- 12: Polymerisationsfenster
- 13: Übertragungsschale
- 14: Kopplungsstruktur
- 15: Stauchung (x) während der Übertragung
- 16: Stützelement
- 17: Übergang Kraftübertragungssegement / zahnmedizinische Vorrichtung
- 210: Erheben von digitalen Daten
- 220: Erstellen eines Modells der Zähne und des Kiefers
- 230: Erzeugen eines Modells der zahnmedizinischen Vorrichtung mit Übertragungsschale
- 240: Herstellen der zahnmedizinischen Vorrichtung mit Übertragungsschale
- 310: Speichereinheit
- 315: Modelliereinheit
- 320: Verarbeitungseinheit
- 325: Anzeigeeinheit
- 330: Eingabeeinheit
- 350: Herstellungseinheit
- 370: Untersuchungseinheit

## Patentansprüche

1. Eine zahnmedizinische Vorrichtung (7) mit Übertragungsschale (13), wobei die zahnmedizinische Vorrichtung (7) und die Übertragungsschale in einem additiven Fertigungsverfahren so hergestellt sind, dass sie durch eine während des additiven Fertigungsverfahrens hergestellte Kopplungsstruktur (14) lösbar miteinander gekoppelt sind, wobei die zahnmedizinische Vorrichtung (7), die Kopplungsstruktur (14) und die Übertragungsschale ein erstes Material umfassen, wobei die Kopplungsstruktur (14) eine höhere Porosität als die zahnmedizinische Vorrichtung (7) aufweist, wobei die Porosität der Kopplungsstruktur (14) so gewählt ist, dass die Übertragungsschale (13) von der zahnmedizinischen Vorrichtung (7) gelöst werden kann, ohne die zahnmedizinische Vorrichtung (7) zu beschädigen.

2. Die zahnmedizinische Vorrichtung (7) mit Übertragungsschale (13) gemäß Anspruch 1, wobei die Übertragungsschale (13) eine Wabenstruktur mit einer geringeren Porosität als die Kopplungsstruktur (14) aufweist.

3. Die zahnmedizinische Vorrichtung (7) mit Übertragungsschale (13) gemäß einem der Ansprüche 1 oder 2, wobei das erste Material ein Material aus der Gruppe Komposit oder Kunststoff umfasst.

4. Eine zahnmedizinische Vorrichtung (7) mit Übertragungsschale (13), wobei die zahnmedizinische Vorrichtung (7) und die Übertragungsschale in einem additiven Fertigungsverfahren so hergestellt sind, dass sie durch eine während des additiven Fertigungsverfahrens hergestellte Kopplungsstruktur (14) lösbar miteinander gekoppelt sind, wobei die Kopplungsstruktur (14) aus einem anderen zweiten Material besteht als die zahnmedizinische Vorrichtung (7) und/oder die Übertragungsschale (13), wobei die Kopplungsstruktur (14) eine Pulverschicht aus dem zweiten Material oder eine Flüssigkeitsschicht aus dem zweiten Material aufweist.

5. Die zahnmedizinische Vorrichtung (7) mit Übertragungsschale (13) gemäß einem der vorangehenden Ansprüche, wobei die Übertragungsschale eine Mantelstruktur (3) aufweist, die die äußere Oberfläche der Übertragungsschale (13) verstärkt.

6. Die zahnmedizinische Vorrichtung (7) mit Übertragungsschale (13) gemäß Anspruch 5, wobei die Mantelstruktur (3) zumindest zwei Segmente aufweist, um ein Abheben der Übertragungsschale (13) von der zahnmedizinischen Vorrichtung (7) von distal zu erleichtern.

7. Die zahnmedizinische Vorrichtung (7) mit Übertragungsschale (13) gemäß Anspruch 5 oder 6, wobei die Mantelstruktur (3) ein Polymerisationsfenster aufweist.

8. Die zahnmedizinische Vorrichtung (7) mit Übertragungsschale (13) gemäß einem der vorangehenden Ansprüche, wobei die Übertragungsschale (13) zumindest eine Anpressmulde (2) aufweist, wobei die Anpressmulde (2) so eingerichtet ist, dass eine Anpresskraft so auf die zahnmedizinische Vorrichtung (7) übertragen wird, dass die zahnmedizinische Vorrichtung orthogonal auf eine Zahnoberfläche angepresst wird, wenn die zahnmedizinische Vorrichtung (7) auf der Zahnoberfläche befestigt wird.

9. Ein Verfahren zur Herstellung einer zahnmedizinischen Vorrichtung (7) mit Übertragungsschale (13) nach einem der Ansprüche 1-8, umfassend die Schritte:
- Erstellen eines digitalen Modells der zahnmedizinischen Vorrichtung (7) basierend auf einem Model von zumindest einem Zahn (5) eines Kiefers;
- Erstellen eines digitalen Modells der Übertragungsschale (13) basierend auf dem Model des zumindest einen Zahns (5) des Kiefers;
- Erstellen eines digitalen Modells einer Kopplungsstruktur (14), die eingerichtet ist, die zahnmedizinische Vorrichtung (7) und die Übertragungsschale (13) lösbar zu koppeln;
- Herstellen der zahnmedizinischen Vorrichtung (7) mit Übertragungsschale (13) und der Kopplungsstruktur (14) basierend auf dem digitalen Modell der zahnmedizinischen Vorrichtung (7) mit Übertragungsschale (13) und der Kopplungsstruktur (14) mittels eines additiven Herstellungsverfahrens.

10. Ein Herstellungsgerät zur Herstellung einer zahnmedizinischen Vorrichtung (7) mit Übertragungsschale (13) nach einem der Ansprüche 1-8, umfassend eine Speichereinheit (310), eine Modelliereinheit (315) und eine Herstellungseinheit (350), wobei die Speichereinheit (310) ausgestaltet ist, digitale Daten eines Modells von zumindest einem Zahn (5) eines Kiefers abzuspeichern, wobei die Modelliereinheit (315) ausgestaltet ist, ein digitales Model der zahnmedizinischen Vorrichtung (7) mit Übertragungsschale (13) und eines Kopplungselementes (14) basierend auf dem Model des zumindest einen Zahns (5) des Kiefers zu erstellen, wobei das Kopplungselement (14) eingerichtet ist, die zahnmedizinische Vorrichtung (7) lösbar mit der Übertragungsschale (13) zu verbinden, und wobei die Herstellungseinheit (350) dazu eingerichtet ist, die zahnmedizinische Vorrichtung (7) mit Übertragungsschale (13) und Kopplungsstruktur (14) basierend auf dem digitalen Modell der zahnmedizinischen Vorrichtung (7) mit Übertragungsschale (13) und der Kopplungsstruktur (14) mittels eines additiven Herstellungsverfahrens herzustellen.

11. Computerprogrammprodukt, das direkt in eine Speichereinheit geladen werden kann und Softwareabschnitte umfasst, mit denen das Verfahren gemäß Anspruch 9 ausgeführt werden kann, wenn das Computerprogrammprodukt auf einem Herstellungsgerät gemäß Anspruch 10 ausgeführt wird.

## Claims

1. A dental medical device (7) with a transfer shell (13), wherein the dental medical device (7) and the transfer shell are manufactured in an additive fabrication method in such a way that they are detachably coupled to each other by a coupling structure (14) manufactured during the additive fabrication method, wherein the dental medical device (7), the coupling structure (14) and the transfer shell comprise a first material, wherein the coupling structure (14) has a higher porosity than the dental medical device (7), wherein the porosity of the coupling structure (14) is chosen such that the transfer shell (13) can be detached from the dental medical device (7) without damaging the dental medical device (7).

2. The dental medical device (7) with the transfer shell (13) according to claim 1, wherein the transfer shell (13) has a honeycomb structure with a lower porosity than the coupling structure (14).

3. The dental medical device (7) with the transfer shell (13) according to any one of the claims 1 or 2, wherein the first material comprises a material from the group consisting of composites or plastics.

4. A dental medical device (7) with a transfer shell (13), wherein the dental medical device (7) and the transfer shell are manufactured in an additive fabrication method in such a way that they are detachably coupled to each other by a coupling structure (14) manufactured during the additive fabrication method, wherein the coupling structure (14) consists of a different second material than the dental medical device (7) and/or the transfer shell (13), wherein the coupling structure (14) has a powder layer of the second material and/or a liquid layer of the second material.

5. The dental medical device (7) with the transfer shell (13) according to any one of the preceding claims, wherein the transfer shell has a sheathing structure (3) that reinforces the outer surface of the transfer shell (13).

6. The dental medical device (7) with the transfer shell (13) according to claim 5, wherein the sheathing structure (3) has at least two segments in order to facilitate the lifting, from the distal direction, of the transfer shell (13) from the dental medical device (7).

7. The dental medical device (7) with the transfer shell (13) according to claim 5 or 6, wherein the sheathing structure (3) has a polymerization window.

8. The dental medical device (7) with the transfer shell (13) according to any one of the preceding claims, wherein the transfer shell (13) has at least one press-on recess (2), wherein the press-on recess (2) is designed in such a way that a press-on force is transferred onto the dental medical device (7) in such a way that the dental medical device is orthogonally pressed onto a tooth surface when the dental medical device (7) is attached to the tooth surface.

9. A method for manufacturing a dental medical device (7) with a transfer shell (13) according to any one of the claims 1-8, comprising the steps of:
- preparing a digital model of the dental medical device (7) based on a model of at least one tooth (5) of a jaw;
- preparing a digital model of the transfer shell (13) based on the model of the at least one tooth (5) of the jaw;
- preparing a digital model of a coupling structure (14) configured for detachably coupling the dental medical device (7) and the transfer shell (13);
- manufacturing the dental medical device (7) with the transfer shell (13) and the coupling structure (14) based on the digital model of the dental medical device (7) with the transfer shell (13) and the coupling structure (14) by means of an additive manufacturing method.

10. A manufacturing device for manufacturing a dental medical device (7) with a transfer shell (13) according to any one of the claims 1-8, comprising a storage unit (310), a modeling unit (315) and a manufacturing unit (350), wherein the storage unit (310) is configured for storing digital data of a model of at least one tooth (5) of a jaw, wherein the modeling unit (315) is configured for preparing a digital model of the dental medical device (7) with a transfer shell (13) and a coupling element (14) based on the model of the at least one tooth (5) of the jaw, wherein the coupling element (14) is configured for detachably connecting the dental medical device (7) with the transfer shell (13), and wherein the manufacturing unit (350) is configured for manufacturing the dental medical device (7) with the transfer shell (13) and the coupling structure (14) based on the digital of model of the dental medical device (7) with the transfer shell (13) and the coupling structure (14) by means of an additive manufacturing method.

11. A computer program product that can be directly uploaded into a storage unit and includes software portions with which the method according to claim 9 can be executed when the computer program product is executed on a manufacturing device according to claim 10.

## Revendications

1. Dispositif médical dentaire (7) comprenant une coque de transfert (13), dans lequel le dispositif médical dentaire (7) et la coque de transfert sont fabriqués dans un procédé de fabrication additive de telle manière qu'ils sont couplés de manière amovible l'un à l'autre par une structure de couplage (14) fabriquée au cours du procédé de fabrication additive, dans lequel le dispositif médical dentaire (7), la structure de couplage (14) et la coque de transfert comprennent un premier matériau, dans lequel la structure de couplage (14) présente une porosité plus importante que le dispositif médical dentaire (7), dans lequel la porosité de la structure de couplage (14) est choisie de manière à ce que la coque de transfert (13) puisse être détachée du dispositif médical dentaire (7) sans endommager le dispositif médical dentaire (7).

2. Dispositif médical dentaire (7) comprenant une coque de transfert (13), selon la revendication 1, dans lequel ladite coque de transfert (13) présente une structure en nid d'abeille ayant une porosité plus faible que la structure de couplage (14).

3. Dispositif médical dentaire (7) comprenant une coque de transfert (13), selon l'une quelconque des revendications 1 ou 2, dans lequel le premier matériau comprend un matériau du groupe constitué du composite ou de la matière plastique.

4. Dispositif médical dentaire (7) comprenant une coque de transfert (13), dans lequel le dispositif médical dentaire (7) et la coque de transfert sont fabriqués dans un procédé de fabrication additive de telle manière qu'ils sont couplés de manière amovible l'un à l'autre par une structure de couplage (14) fabriquée au cours du procédé de fabrication additive, dans lequel la structure de couplage (14) est constituée d'un deuxième matériau différent de celui du dispositif médical dentaire (7) et/ou de la coque de transfert (13), dans lequel la structure de couplage (14) présente une couche de poudre constituée du deuxième matériau ou une couche de liquide constituée du deuxième matériau.

5. Dispositif médical dentaire (7) comprenant une coque de transfert (13), selon l'une quelconque des revendications précédentes, dans lequel la coque de transfert comprend une structure d'enveloppe (3) qui renforce la surface extérieure de la coque de transfert (13).

6. Dispositif médical dentaire (7) comprenant une coque de transfert (13), selon la revendication 5, dans lequel la structure d'enveloppe (3) comprend au moins deux segments afin de faciliter un détachement de la coque de transfert (13) du dispositif médical dentaire (7) depuis la face distale.

7. Dispositif médical dentaire (7) comprenant une coque de transfert (13), selon la revendication 5 ou 6, dans lequel la structure d'enveloppe (3) présente une fenêtre de polymérisation.

8. Dispositif médical dentaire (7) comprenant une coque de transfert (13), selon l'une quelconque des revendications précédentes, dans lequel la coque de transfert (13) présente au moins un creux de pression (2), ledit creux de pression (2) étant agencé de telle sorte qu'une force de pression est transmise au dispositif médical dentaire (7) de telle manière que le dispositif médical dentaire est pressé orthogonalement sur une surface dentaire lorsque le dispositif médical dentaire (7) est fixé sur la surface dentaire.

9. Procédé de production d'un dispositif médical dentaire (7) comprenant une coque de transfert (13), selon l'une quelconque des revendications 1 à 8, comprenant les étapes consistant à:
- créer un modèle numérique du dispositif médical dentaire (7) sur la base d'un modèle d'au moins une dent (5) d'une mâchoire;
- créer un modèle numérique de la coque de transfert (13) sur la base du modèle de ladite au moins une dent (5) de la mâchoire;
- créer un modèle numérique d'une structure de couplage (14) qui est agencée pour coupler de manière amovible le dispositif médical dentaire (7) et la coque de transfert (13);
- réaliser le dispositif médical dentaire (7) comprenant la coque de transfert (13) ainsi que la structure de couplage (14) sur la base du modèle numérique du dispositif médical dentaire (7) comprenant la coque de transfert (13) et de la structure de couplage (14) au moyen d'un procédé de fabrication additive.

10. Dispositif de fabrication destiné à fabriquer un dispositif médical dentaire (7) avec une coque de transfert (13) selon l'une quelconque des revendications 1 à 8, comprenant une unité de stockage (310), une unité de modelage (315) et une unité de fabrication (350), dans lequel l'unité de stockage (310) est conçue pour stocker des données numériques d'un modèle d'au moins une dent (5) d'une mâchoire, dans lequel l'unité de modélisation (315) est conçue pour créer un modèle numérique du dispositif médical dentaire (7) avec une coque de transmission (13) et d'un élément de couplage (14) sur la base du modèle de ladite au moins une dent (5) de la mâchoire, dans lequel l'élément de couplage (14) est configuré pour relier de manière amovible le dispositif médical dentaire (7) à la coque de transfert (13), et dans lequel l'unité de fabrication (350) est configurée pour fabriquer au moyen d'un procédé de fabrication additive le dispositif médical dentaire (7) avec la coque de transfert (13) et la structure de couplage (14) sur la base du modèle numérique du dispositif médical dentaire (7) avec la coque de transfert (13) et de la structure de couplage (14).

11. Produit de programme informatique qui peut être chargé directement dans une unité de stockage et comprend des sections logicielles avec lesquelles le procédé selon la revendication 9 peut être mis en œuvre lorsque le produit de programme informatique est exécuté sur un dispositif de fabrication selon la revendication 10.
